Europäisches Patentamt

European Patent Office

Office européen des brevets

(19)

(11) Veröffentlichungsnummer: **0 515 765 B1**

(12) **EUROPÄISCHE PATENTSCHRIFT**

(45) Veröffentlichungstag der Patentschrift: **20.09.95**

(51) Int. Cl.6: **B01D 1/00**, A23L 2/10

(21) Anmeldenummer: **91810394.6**

(22) Anmeldetag: **24.05.91**

(54) **Verfahren zum Betrieb einer Eindampfanlage und gemäss diesem Verfahren betriebene Eindampfanlage.**

(30) Priorität: **23.02.91 CH 543/91**

(43) Veröffentlichungstag der Anmeldung:
**02.12.92 Patentblatt 92/49**

(45) Bekanntmachung des Hinweises auf die Patenterteilung:
**20.09.95 Patentblatt 95/38**

(84) Benannte Vertragsstaaten:
**DE**

(56) Entgegenhaltungen:
EP-A- 0 047 483          EP-A- 0 244 079
US-A- 2 745 484          US-A- 3 250 313
US-A- 4 437 934          US-A- 4 676 870

CHEMISCHE TECHNIK Band 13, Januar 1961,
Seite 26-28, Berlin, DE; J. TABEAU: "Die vollautomatische Regelung von Verdampfern
und Konvertern"

CHEMICAL PROCESSING Juni 1965, Seite
93-95; R.A. KULWIEC: "Black-Liquor Density
Closely Policed"

(73) Patentinhaber: **UNIPEKTIN AG**
**Dufourstrasse 48**
**CH-8034 Zürich (CH)**

(72) Erfinder: **Laengle, Karl**
**Wermatswilerstrasse 86**
**CH-8610 Uster (CH)**

(74) Vertreter: **Werffeli, Heinz R., Dipl.-Ing.ETH. et al**
**Postfach 275**
**Waldgartenstrasse 12**
**CH-8125 Zürich-Zollikerberg (CH)**

Rank Xerox (UK) Business Services
(3.10/3.09/3.3.3)

## Beschreibung

Die Erfindung betrifft ein Verfahren zum Betrieb einer ein-oder mehrstufigen Eindampfanlage sowie eine gemäss diesem Verfahren betriebene Eindampfanlage.

Bei Eindampfanlagen zum Eindampfen fliessfähiger Substanzen wird im allgemeinen ein möglichst gleichmässiger Trockensubstanzgehalt des Endproduktes erwünscht. Dazu wird der Endtrockensubstanzgehalt der am Austritt des Eindampfers austretenden eingedampften Substanz kontinuierlich gemessen und als Grösse zur eventuell erforderlichen Nachregelung der Dampfzufuhrmenge verwendet. Eine solche Regulierung weist jedoch den Nachteil auf, dass bei einer plötzlichen Änderung der Zufuhrmenge und/oder des Trockensubstanzgehaltes der einzudampfenden Substanz am Eintritt des Eindampfers die dadurch bewirkte Veränderung des Trockensubstanzgehaltes erst nach einer erheblichen Zeitverzögerung am Austritt des Eindampfers feststellbar und damit nachregulierbar ist, so dass durch Übersteuern oder Pendeln erhebliche Ungleichmässigkeiten im Endtrockensubstanzgehalt auftreten.

Aufgabe der vorliegenden Erfindung ist insbesondere die Schaffung eines Verfahrens, welches diesen Nachteil nicht aufweist, das heisst mit dem es möglich ist, die dem Eindampfer zugeführte Dampfzufuhrmenge praktisch parallel zur durch den Eindampfer strömenden, einzudampfenden Substanz und in gleichzeitiger Abhängigkeit von deren Zufuhrmenge und/oder Eintrittstrockensubstanzgehalt zu regulieren, so dass selbst bei plötzlichen erheblichen Aenderungen der Zufuhrmenge und/oder des Trockensubstanzgehaltes am Substanzeintritt des Eindampfers an dessen Austritt der gewünschte Trockensubstanzgehalt praktisch schwankungsfrei erzielbar ist.

Diese Aufgabe wird bei einem Verfahren der eingangs genannten Art erfindungsgemäss nach dem Kennzeichen des Anspruchs 1 gelöst.

Weitere vorteilhafte Weiterausgestaltungen des erfindungsgemässen Verfahrens sind Gegenstand der Ansprüche 2 bis 7.

Gegenstand der vorliegenden Erfindung ist ferner eine Eindampfanlage gemäss Anspruch 8 sowie eine Verwendung derselben..

Nachstehend wird die Erfindung anhand der Zeichnung beispielsweise erläutert. Es zeigt:

Fig. 1     eine erste beispielsweise Ausführungsform einer erfindungsgemäss betriebenen Eindampfanlage; und

Fig. 2     eine zweite beispielsweise Ausführungsform einer erfindungsgemäss betriebenen Eindampfanlage.

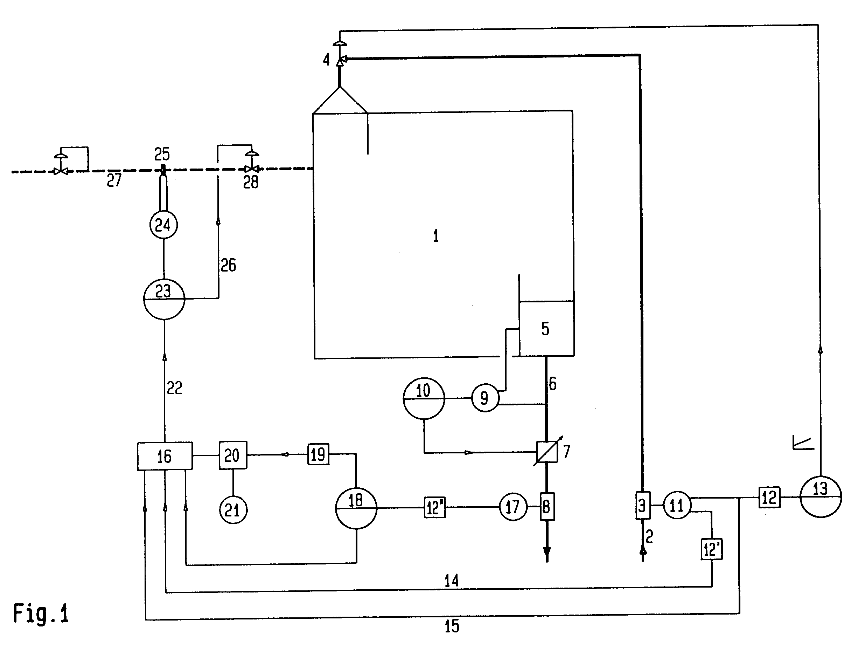

In Figur 1 ist eine mit einem mehrstufigen Eindampfer 1 versehene Eindampfanlage zur Herstellung von Fruchtkonzentraten wie z.B. Apfel- oder Birnenkonzentraten, dargestellt.

Bei dieser Anlage wird die einzudampfende Substanz über die Zuleitung 2, die Eintrittsmessstelle 3 und das steuerbare Regulierventil 4 dem Eindampfer 1 zugeführt.

Die eingedampfte Substanz wird über die mit dem letzten Abscheider 5 des Eindampfers 1 verbundene Abführleitung 6, die Pumpe 7 und die Austrittsmessstelle 8 aus dem Eindampfer 1 abgeführt.

Als Hilfsschlaufe für eine Stabilisierung des Trockensubstanzgehaltes am Austritt des Eindampfers 1 dient eine Niveauregulierung 9 im letzten Abscheider 5 des Eindampfers 1, welche über einen Regler 10 mit der Pumpe 7 verbunden ist.

Die Messstelle 3 ist mit einer Messanordnung 11 zur Bestimmung des Trockensubstanzgehaltes $Bx_e$ und des Massendurchflusses $M_e$ der dem Eintritt des Eindampfers 1 zugeführten Substanz verbunden. Die Messanordnung 11 ist einerseits über ein Zeitverzögerungsglied 12 und einen Regler 13 mit dem Regulierventil 4 und anderseits über die Verbindungsleitungen 14 und 15, wobei in der einen ebenfalls ein Zeitverzögerungsglied 12' angeordnet ist, mit einem Rechner 16 verbunden.

Die Messstelle 8 ist mit einer Messanordnung 17 zur Bestimmung des Trockensubstanzistgehaltes $Bx_a'$ und des Massendurchflusses $M_a$ der aus dem Austritt des Eindampfers 1 abgeführten eingedampften Substanz verbunden. Die Messanordnung 17 ist ihrerseits über ein Zeitverzögerungsglied 12'' und einen Regler 18 einerseits mit dem Rechner 16 und anderseits über eine Anzeigeeinheit 19 und über ein Stellglied 20 zur Einstellung einer Anlagenkonstanten K ebenfalls mit dem Rechner 16 verbunden. Die Einstellung der Anlagenkonstanten K erfolgt in dargestellten Ausführungsbeispiel von Hand 21, kann jedoch selbstverständlich auch mittels einer dazu geeigneten Steuerung automatisch bewirkt werden.

Der gemessene Trockensubstanzistgehalt $Bx_a'$ dient nur zum Vergleich und Kontrolle im Rechner 16 mit dem vorgegebenen Trockensubstanzsollgehalt $Bx_a$, da normalerweise diese beiden Werte identisch zueinander und konstant für eine bestimmte einzudampfende Substanz sein sollen.

Der Ausgang des Rechners 16 ist über eine Verbindungsleitung 22 mit einem Regler 23 verbunden, der auf seiner Eingangsseite zusätzlich über eine Messanordnung 24 zur Bestimmung der Dampfdurchflussmenge D' des dem Dampfeintritt des Eindampfers 1 zugeführten Prozessdampfes mit der Messstelle 25 verbunden ist.

Auf diese Weise wird dem Regler 23 vom Rechner 16 her der Wert D der momentanen Soll-Dampfdurchflussmenge und von der Messanordnung 24 her die momentane Ist-Dampfdurchflussmenge D' zugeführt, und bei Überschreitung eines bestimmten Toleranzbereiches über die Verbindungsleitung 26 ein Verstellsignal an das in der Dampfzuleitung 27 angeordnete Regelventil 28 zur Veränderung der Dampfdurchflussmenge abgegeben.

Der Betrieb der in Figur 1 dargestellten Eindampfanlage läuft wie nachstehend näher beschrieben, ab.

Beim Start der Anlage, d.h. beim Einfahren derselben mit der einzudampfenden Substanz wird am Stellglied 20 in grober Annäherung ein Erfahrungswert für die Anlagenkonstante K eingestellt, worauf sich eine bestimmte Dampfzufuhrmenge D' am Dampfeintritt des Eindampfers 1 und damit ein bestimmter Trockensubstanzgehalt $Bx_a'$ in der aus dem Eindampfer 1 austretenden eingedampften Substanz einstellt, wobei dieser Ist-Trockensubstanzgehalt $Bx_a'$ noch vom gewünschten Sollwert $Bx_a$ abweichen kann.

Darauf wird am Stellglied 20 der Einstellwert K so lange verändert, bis am Austritt des Eindampfers 1 der dort gemessene Trockensubstanzgehalt $Bx_a'$ genau dem gewünschten Sollwert $Bx_a$ entspricht. Damit ist die für diesen Betriebszustand zugeordnete Anlagenkonstante K der für eine solche Anlage in erster Annäherung geltenden linearen Beziehung $K \cdot M_e \cdot (Bx_a - Bx_e)/Bx_a = D$ und für einen konstanten $Bx_a$-Wert für die dabei einzudampfende Substanz durch den Rechner 16 ermittelbar.

Diese Anlagenkonstante K und der Trockensubstanzgehalt $Bx_a$ wird nun während dem weiteren Eindampfvorgang mindestens anfänglich konstant gehalten, wobei der Rechner 16 mit Hilfe der von den Messstellen 3 und 8 erhaltenen Messwerte $M_e$, $Bx_e$ und $Bx_a'$ und der einprogrammierten Gleichung $K \cdot M_e \cdot (Bx_a - Bx_e)/Bx_a = D$ die jeweilige momentane Soll-Dampfzufuhrmenge D bestimmt, diesen Wert dem Regler 23 zuführt, wo er mit dem von der Messstelle 25 erhaltenen Ist-Wert verglichen und bei Überschreitung eines bestimmten Toleranzbereiches ein Stellsignal an das Regulierventil 28 bewirkt, sowie $Bx_a$ und $Bx_a'$ zur Kontrolle miteinander verglichen. Überschreitet infolge sekundärer Parameter wie z.B. Verschmutzung des Eindampfers 1 die Abweichung vom gemessenen $Bx_a'$-Istwert zum im Rechner 16 errechneten $Bx_a$-Sollwert ein bestimmtes, als unzulässig erachtetes Mass, dann wird zur Reduzierung oder Eliminierung dieser Abweichung zwischen Ist- und Sollwert eine entsprechende Nachkorrektur der zur Steuerung der Dampfzufuhrmenge D' verwendeten Anlagenkonstante K bewirkt und die Anlage bis zur nächsten eventuell erforderlichen weiteren Korrektur der im Betrieb zur Berechnung der erforderlichen Dampfzufuhrmenge D verwendeten Anlagenkonstante K mit Hilfe dieser nachkorrigierten Anlagekonstanten K betrieben.

Die Zeitverzögerungsglieder 12, 12' und 12'' bilden jeweils einen Mittelwert über einen bestimmten Zeitabschnitt von beispielsweise 5 Sekunden, um zu vermeiden, dass die geringsten momentanen Schwankungen im Substanzzu- und/oder abfluss unnötigerweise eine sofortige Veränderung der Dampfzufuhrmenge D' bewirken, und geben ihr Ausgangssignal in Abhängigkeit von der Zuflussgeschwindigkeit der einzudampfenden Substanz und deren Verweilzeit im Eindampfer 1 entsprechend verzögert an den Rechner 16 weiter, so dass die am Austritt des Eindampfers 1 austretende eingedampfte Substanz möglichst genau und gleichmässig den geforderten Trockensubstanzgehalt $Bx_a$ aufweist.

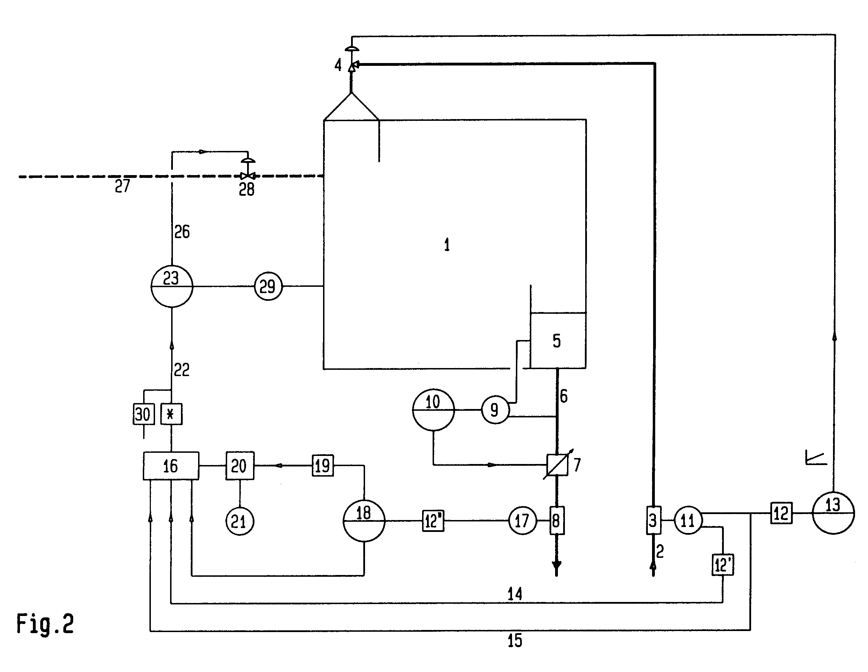

Bei der in Figur 2 dargestellten Ausführungsform sind zu Figur 1 analoge Teile mit den gleichen Überweisungszeichen versehen, so dass sich eine nochmalige Beschreibung dieser Teile erübrigt.

Im Gegensatz zu der in Figur 1 dargestellten Ausführungsform wird gemäss Figur 2 die dem Eindampfer 1 an dessen Eintritt zugeführte momentane Ist-Dampfzufuhrmenge D' indirekt mittels einer den im Eindampfer 1 herrschenden Dampfdruck messenden Dampfdruckmessanordnung 29 ermittelt und mit Hilfe dieses Messwertes und der im Rechner 16 berechneten momentanen Dampfzufuhrsollmenge D bzw. des dieser zugeordneten Dampfdruckes nach Addition 30 mit einem Grunddruck $P_o$ im Regler 23 die Differenz gebildet und bei Überschreitung eines bestimmten Toleranzbereiches ein entsprechendes Stellsignal über die Verbindungsleitung 26 zur Nachregulierung der Dampfzufuhristmenge D' dem Regulierventil 28 zugeführt.

**Patentansprüche**

1.  Verfahren zum Betrieb einer ein- oder mehrstufigen Eindampfanlage, wobei man beim Einfahren der Anlage mit der einzudampfenden Substanz die Dampfzufuhr zur Eindampfanlage (1) auf einen solchen Wert einregelt, bei dem der Trockensubstanzgehalt $Bx_a$ der aus der Eindampfanlage (1) austretenden Ausgangssubstanz dem gewünschten Wert entspricht, die zu diesem Zeitpunkt geltenden Werte für $M_e$, $Bx_a$, $Bx_e$ und D bestimmt, wobei $M_e$ der Massendurchfluss der einzudampfenden Substanz am Eintritt der Eindampfanlage in kg/h, $Bx_a$ der Trockensubstanzsollgehalt der eingedampften Substanz am Austritt der Eindampfanlage in Gew.-%, $Bx_e$ der Trockensubstanzistgehalt der einzudampfenden Substanz am Eintritt der Eindampfanlage in Gew.-%, und D die Dampfzufuhr in kg/h bedeuten, woraus sich auf Grund einer für die Eindampfanlage für diese einzudampfende Substanz in Annäherung geltenden linearen Beziehung

$$K \cdot M_e \cdot (Bx_a - Bx_e)/Bx_a = D$$

eine dieser Substanz für diesen Betriebszustand zugeordnete Anlageneinstellgrösse K bestimmen lässt, und darauf beim anschliessenden weiteren Betrieb dieser Anlage mit Hilfe dieser derart bestimmten Anlageneinstellgrösse K und dem gewünschten Endtrockensubstanzgehalt-Sollwert $Bx_a$ und mit Hilfe der genannten linearen Beziehung $K \cdot M_e \cdot (Bx_a - Bx_e)/Bx_a = D$ auf Grund des jeweils momentanen Massendurchflusses $M_e$ und Trockensubstanzgehaltes $Bx_e$ der am Eintritt der Eindampfanlage einströmenden, einzudampfenden Substanz die zur Einhaltung der obgenannten Beziehung erforderliche, der Eindampfanlage zuzuführende Dampfzufuhrsollmenge D unmittelbar ermittelt und die Dampfzufuhrmenge entsprechend regelt.

2. Verfahren nach Anspruch 1, dadurch gekennzeichnet, dass man nach dem Einfahren der Anlage die der Eindampfanlage (1) zugeführte momentane Dampfmenge (D') mittels einer Mengenmessanordnung (24,25) ermittelt und mit Hilfe diese Messwertes und der berechneten momentanen Dampfzufuhrsollmenge (D) die Dampfzufuhrmenge mit Hilfe eines Regulierungsorganes (28) bei Bedarf entsprechend reguliert (Fig. 1).

3. Verfahren nach Anspruch 1, dadurch gekennzeichnet, dass man nach dem Einfahren der Anlage die der Eindampfanlage (1) zugeführte momentane Dampfmenge (d') indirekt mittels einer den in der Eindampfanlage (1) herrschenden Dampfdruck messenden Dampfdruckmessanordnung (29) ermittelt und mit Hilfe dieses Messwertes und der berechneten momentanen Dampfzufuhrsollmenge (D) die Dampfzufuhristmenge (D') mit Hilfe eines Regulierorganes (28) bei Bedarf entsprechend reguliert, (Fig. 2).

4. Verfahren nach einem der Ansprüche 1 bis 3, dadurch gekennzeichnet, dass man die Dampfzufuhrsollmenge (D) mittels eines mit Messfühlern (11,17) verbundenen Rechners (16) ermittelt und das Ausgangsstellsignal des letzteren zur Regulierung der Dampfzufuhristmenge (D') verwendet.

5. Verfahren nach Anspruch 4, dadurch gekennzeichnet, dass man nach dem Einfahren der

Anlage die Messwerte $M_e$ und $Bx_e$ zeitlich verzögert dem Rechner (16) zuführt oder das Ausgangsstellsignal des letzteren verzögert zur Regulierung der Dampfzufuhristmenge (D') verwendet.

6. Verfahren nach Anspruch 4, dadurch gekennzeichnet, dass man beim Einfahren der Anlage die Dampfzufuhrmenge durch Änderung des vom Rechner (16) zur Bestimmung des Ausgangsstellsignals benötigten K-Wertes reguliert bis der $Bx_a$-Sollwert am Eindampferaustritt erzielt wird, worauf die Anlageneinstellgrösse K für die dabei verwendete, einzudampfende Substanz festliegt, und danach diesen K-Wert mindestens annähernd konstant belässt.

7. Verfahren nach einem der Ansprüche 1 bis 6, dadurch gekennzeichnet, dass man nach dem Einfahren der Anlage und der dabei ermittelten Anlageneinstellgrösse K den $Bx_a$-Sollwert mit dem Trockensubstanz-Istgehalt der eingedampften Substanz am Austritt der Eindampfanlage vergleicht, und bei Überschreitung eines Toleranzbereiches zur Reduzierung oder Eliminierung dieser Abweichung zwischen Ist- und Sollwert eine entsprechende Korrektur der nachher zur Steuerung der Dampfzufuhrmenge D verwendeten Anlageneinstellgrösse K vorgenommen wird.

8. Eindampfanlage zur Durchführung des Verfahrens nach Anspruch 1, gekennzeichnet durch eine über eine Eintrittsmessstelle (3) und ein steuerbares Regulierventil (4) mit einem Eindampfer (1) verbundene Zuleitung (2) zur Zufuhr der einzudampfenden Substanz, eine mit dem letzten Abscheider (5) des Eindampfers (1) verbundene, mit einer Pumpe (7) sowie einer Austrittsmessstelle (8) versehene Abführleitung (6), eine im letzten Abscheider (5) des Eindampfers (1) angeordnete Niveauregulierung (9), welche über einen Regler (10) mit der in der Abführleitung (6) angeordneten Pumpe (7) zur Regulierung derselben verbunden ist, dass die in der Zuleitung (2) vorgesehene Messstelle (3) mit einer ersten Messanordnung (11) zur Bestimmung des Trockensubstanzgehaltes $Bx_e$ und des Massendurchflusses $M_e$ der dem Eintritt des Eindampfers (1) zugeführten Substanz verbunden ist, wobei diese erste Messanordnung (11) einerseits über ein Zeitverzögerungsglied (12) und einen Regler (13) mit dem in der Zuleitung (2) angeordneten Regulierventil (4) und anderseits über zwei Verbindungsleitungen (14,15), wobei in der einen ebenfalls ein Zeitverzögerungsglied (12') angeordnet ist, mit einem Rechner (16) verbunden ist, dass die in der Abführleitung (6) angeordnete Messstelle (8) mit einer zweiten Messanordnung (17) zur Bestimmung des Trockensubstanzistgehaltes $Bx_{a'}$ und des Massendurchflusses $M_a$ der aus dem Austritt des Eindampfers (1) abgeführten, eingedampften Substanz verbunden ist, wobei diese zweite Messanordnung (17) ihrerseits über ein Zeitverzögerungsglied (12'') und einen Regler (18) einerseits mit dem Rechner (16) und andererseits über eine Anzeigeeinheit (19) und über ein Stellglied (20) zur Einstellung einer Anlagenkonstanten K ebenfalls mit dem Rechner (16) verbunden ist, und der Ausgang des Rechners (16) über eine Verbindungsleitung (22) mit einem Regler (23), und dieser mit einen in einer mit dem Eindampfer (1) verbundenen Dampfzuleitung (27) angeordneten Regelventil (28) zur Veränderung der Dampfdurchflussmenge verbunden ist.

9. Verwendung der Eindampfanlage nach Anspruch 8 zur Herstellung von Fruchtkonzentraten.

**Claims**

1. A method to operate a single or multi-stage evaporation plant, whereby the vapour inlet to the evaporation plant (1) is set to such a value during the start-up procedure of the plant with the substances to be evaporated, at which the dry substance contents $Bx_a$ of the initial substance discharged from the evaporation plant (1) corresponds to the requested value, and which determines the values for $M_e$, $Bx_a$, $Bx_e$, and D at this point in time, whereby $M_e$ stands for the mass throughflow of the substance to be evaporated at the inlet of the evaporation plant in kg/h, and whereby $Bx_a$ represents the setpoint dry substance contents of the substance to be evaporated at the outlet of the evaporation plant in per cent in weight, and whereby $Bx_e$ stands for the dry substance contents of the substance to be evaporated at the inlet of the evaporation plant in per cent in weight, and whereby D represents the vapour inlet in kg/h, all of which permit the determination of a plant adjustment parameter K allocated to this operating condition on account of the linear relationship

$$K \cdot M_e \cdot (Bx_a - Bx_e) / Bx_a = D$$

approximately applicable for this substance to be evaporated, and which directly determines the setpoint vapour inlet volume D to be fed to the evaporation plant and which controls the vapour inlet volume correspondingly for the subsequent further operation of this plant by means of the thus determined plant adjustment parameter K and the requested final setpoint dry substance contents $Bx_a$ and by means of the said linear relationship $K \cdot M_e \cdot (Bx_a - Bx_e) / Bx_a = D$ on the basis of the respective mass throughflow $M_e$ and the dry substance contents $Bx_e$ of the substance to be evaporated entering at the inlet of the evaporation plant required to maintain the relationship mentioned above.

2. A method according to claim 1 characterised by the fact that after the completion of the start-up procedure of the plant the volume of vapour (D') presently fed to the evaporation plant (1) is determined by means of a quantity meter system (24, 25), and by the fact that on the basis of this measured value and the calculated present setpoint vapour inlet volume (D) the vapour volume is correspondingly controlled as required by the means of a control device (28) (Fig. 1).

3. A method according to claim 1 characterised by the fact that after the completion of the start-up procedure of the plant the vapour volume (d') presently fed to the evaporation plant is determined indirectly by means of a system (29) measuring the vapour pressure in the evaporation plant (1), and by the fact that on the basis of this measured value and the calculated present setpoint vapour inlet volume (D) the real vapour inlet volume (D') is correspondingly controlled as required by means of a control device (28) (Fig. 2).

4. A method according to one of the claims 1 to 3 characterised by the fact that the setpoint vapour inlet volume (D) is determined by means of sensors (11, 17) connected to a processor (16), and the output actuating signal of the latter is used for the control of the real vapour inlet volume (D').

5. A method according to claim 4 characterised by the fact that after the completion of the start-up procedure of the plant the measured values $M_e$ and $Bx_e$ are supplied to the processor (16) time-delayed or the output actuating signal is used time-delayed for the control of the real vapour inlet volume (D').

6. A method according to claim 4 characterised by the fact that during the start-up procedure of the plant the vapour inlet volume is controlled by modification of the K value required by the processor (16) for the determination of the output actuating signal until the setpoint $Bx_a$ value is obtained at the evaporator outlet, whereupon the plant adjustment parameter K is determined for the substance to be evaporated, and this K value is then retained constant, approximately at least.

7. A process according to one of the claims 1 to 6 characterised by the fact that after completion of the start-up procedure of the plant and after the determination of the plant adjustment parameter K the setpoint $Bx_a$ value is compared to the real dry substance contents of the substance evaporated at the outlet of the evaporator, and in case a tolerance range is exceeded a corresponding correction of the plant adjustment parameter K subsequently used to control the vapour inlet volume is carried out to reduce or eliminate this deviation between real value and setpoint value.

8. An evaporation plant to carry out the method as set forth in claim 1 characterised by a feeding pipe (2) connected to an evaporator (1) via an inlet measuring point (3) and a controllable control valve (4) to feed the substance to be evaporated, and characterised by an outlet pipe (6) provided with an outlet measuring point (8) and a pump (7) connected to the last separator (5) of the evaporator (1), and characterised by a level control (9) located in the last separator (5) of the evaporator (1) which is connected via a controller (10) to the pump (7) located in the outlet pip (6) for control of the latter so that the measuring point (3) provided in the feeding pipe (2) is connected up to a first measuring system (11) used for the determination of the dry substance contents $Bx_e$ and the mass throughflow $M_e$ of the substance fed to the inlet of the evaporator (1) whereby this first measuring system (11) is connected to a processor (16) via a time-delay element (12) and a controller (13) with the control valve (4) located in the feeding pipe (2) on the one hand, and via two connecting pipes (14, 15) on the other hand, whereby in one a time-delay element (12') is provided as well so that the measuring point (8) located in the outlet pipe (6) is connected up to a second measuring system (17) used for the determination of the dry substance contents $Bx_a$ and the mass throughflow $M_a$ of the evaporated substance discharged at the outlet of the evaporator (1), whereby this second measuring system (17) in turn is connected to the processor (16) via a time-delay element (12'') and a controller (18) on the one hand, and via a display unit (19) and via an adjustment element (20) on the other hand for the determination of a plant constant K, and characterised by the fact that the output of the processor (16) is connected to a controller (23) via a connecting cable (22), and the first is connected to a control valve (28) located in a vapour inlet pipe (27) linked to the evaporator (1) used to modify the vapour throughflow volume.

9. The usage of the evaporation plant as set forth in claim 8 for the production of fruit concentrates.

**Revendications**

1. Procédé permettant l'exploitation d'une installation de concentration par évaporation à un ou plusieurs étages, où, lors de la mise en service de l'installation et en se servant du produit à concentrer, l'on règle l'alimentation en vapeur de l'installation de concentration (1) à une valeur qui fait correspondre la teneur en matière sèche $Bx_a$ du produit sortant de l'installation de concentration (1) à la valeur souhaitée; l'on détermine les valeurs s'appliquant à ce moment-là aux grandeurs $M_e$, $Bx_a$, $Bx_e$ et D, $M_e$ étant le débit massique du produit à concentrer à l'entrée de l'installation de concentration en kg/h, $Bx_a$ étant la consigne de la teneur en matière sèche du produit concentré à la sortie de l'installation de concentration en % poids, $Bx_e$ étant la mesure de la teneur en matière sèche du produit à concentrer à l'entrée de l'installation de concentration en % poids et D étant l'arrivée de vapeur en kg/h, ce qui permet de déterminer, à l'aide d'une relation linéaire applicable par approximation pour ce produit à concentrer à l'installation de concentration :

$$K \cdot M_e \cdot (Bx_a - Bx_e) / Bx_a = D$$

une grandeur de réglage de l'installation K affectée à ce produit pour cet état d'exploitation; et où, par la suite et dans le cadre de l'exploitation de cette installation, l'on détermine directement la consigne du débit d'alimentation en vapeur D de l'installation de concentration requise pour obtenir le respect de l'équation ci-dessus à l'aide de la grandeur de réglage K et de la consigne de la teneur finale en matière sèche du produit concentré et à l'aide de la relation linéaire citée ci-dessus $K \cdot M_e \cdot (Bx_a - Bx_e) / Bx_a = D$, et en se basant sur le débit massique $M_e$ momentané et sur la teneur en matière sèche $Bx_e$ du produit à concentrer arrivant à l'entrée de l'installation de concentration, et où l'on règle le débit d'alimentation en vapeur conformément à ce résultat.

2. Procédé selon la revendication 1, caractérisé en ce que, après la mise en service de l'installation, le débit de vapeur momentané (D') est déterminé au moyen d'un dispositif de mesure de débit (24,25) et que, à l'aide de cette mesure et de la consigne calculée du débit d'alimentation en vapeur (D), le débit d'alimentation en vapeur est ajusté au moyen d'un organe de régulation (28) en cas de besoin (fig. 1).

3. Procédé selon la revendication 1, caractérisé en ce que, après la mise en service de l'installation, le débit de vapeur momentané (D') amené à l'installation de concentration (1) est déterminé indirectement au moyen d'un dispositif de mesure de la pression vapeur (29) détectant la pression vapeur régnant dans l'installation de concentration (1) et que, à l'aide de cette mesure et de la consigne calculée du débit d'alimentation en vapeur (D), le débit réel d'alimentation en vapeur (D') est ajusté au moyen d'un organe de régulation (28) en cas de besoin (fig. 2).

4. Procédé selon l'une des revendications 1 à 3, caractérisé en ce que la consigne du débit d'alimentation en vapeur (D) est déterminée au moyen d'un calculateur (16) relié aux capteurs (11,17) et que le signal d'asservissement de sortie de ce dernier est utilisé pour ajuster le débit réel d'alimentation en vapeur (D').

5. Procédé selon la revendication 4, caractérisé en ce que, après la mise en service de l'installation, les mesures $M_e$ et $Bx_e$ sont transmises au calculateur (16) avec une temporisation, ou que le signal d'asservissement de sortie de ce dernier est utilisé, avec une temporisation, pour ajuster le débit réel d'alimentation en vapeur (D').

6. Procédé selon la revendication 4, caractérisé en ce que, lors de la mise en service de l'installation, le débit d'alimentation en vapeur est ajusté en modifiant la valeur K, nécessaire au calculateur (16) pour déterminer le signal d'asservissement de sortie, jusqu'à ce que la consigne $Bx_a$ soit atteinte à la sortie de l'évaporateur, définissant ainsi la grandeur de réglage de l'installation K pour le produit à concentrer utilisé, et que cette valeur K est ensuite maintenue approximativement constante.

7. Procédé selon l'une des revendications 1 à 6, caractérisé en ce que, après la mise en service de l'installation et la détermination correspondante de la grandeur de réglage de l'installation K, la consigne $Bx_a$ est comparée à la mesure de la teneur en matière sèche du produit concentré à la sortie de l'installation de concentration, et que, s'il y a dépassement d'une fourchette de tolérance, la grandeur de réglage K, utilisée ultérieurement pour piloter le débit d'alimentation en vapeur D, est corrigée afin de réduire ou d'éliminer cet écart entre mesure et consigne.

8. Dispositif d'évaporation pour mise en oeuvre le procédé selon la revendication 1, caractérisée par une conduite d'alimentation (2), reliée à un évaporateur (1) par l'intermédiaire d'un point de mesure d'entrée (3) et d'une vanne de régulation pilotable (4), qui amène le produit à concentrer; une conduite d'évacuation (6), reliée au dernier séparateur (5) de l'évaporateur (1) et munie d'une pompe (7) et d'un point de mesure de sortie (8); une régulation de niveau (9), implantée dans le dernier séparateur (5) de l'évaporateur (1), qui est reliée par l'intermédiaire d'un régulateur (10) à la pompe (7) située dans la conduite d'évacuation (6) afin de piloter cette pompe; caractérisée en ce que le point de mesure (3) prévu dans la conduite d'alimentation (2) est connecté à un premier dispositif de mesure (11), déterminant la teneur en matière sèche $Bx_e$ etle débit massique $M_e$ du produit amené à l'entrée de l'évaporateur (1), ce premier dispositif de mesure (11) étant, d'une part, relié par l'intermédiaire d'un temporisateur (12) et d'un régulateur (13) à la vanne de régulation (4) implantée dans la conduite d'alimentation (2) et, d'autre part, par l'intermédiaire de deux lignes de connexion (14,15), dont une comporte également un temporisateur (12'), à un calculateur (16); que le point de mesure (8) implanté dans la conduite d'évacuation (6) est connecté à un deuxième dispositif de mesure (17) déterminant la teneur en matière sèche $Bx_a$ et le débit massique $M_a$ du produit concentré évacué à la sortie de l'évaporateur (1), ce deuxième dispositif de mesure (17) étant également relié, d'une part, par l'intermédiaire d'un temporisateur (12'') et d'un régulateur (18) au calculateur (16), et, d'autre part, par l'intermédiaire d'une unité de visualisation (19) et d'un organe de pilotage (20) servant à régler la constante d'installation K, également au calculateur (16); et que la sortie du calculateur (16) est reliée par une ligne de connexion (22) à un régulateur (23), qui est relié à une vanne de régulation (28), agissant sur le débit d'alimentation en vapeur, implantée dans la conduite d'alimentation en vapeur (27) raccordée à l'évaporateur (1).

9. Utilisation de la dispositif d'évaporation selon la revendication 8 pour produire des concentrés de fruits.

EP 0 515 765 B1

Fig. 1

9

Fig.2

EP 0 515 765 B1